# EUROPEAN PATENT APPLICATION

(11) **EP 4 687 193 A1**
(43) Date of publication of application: **04.02.2026**
(21) Application number: 25184860.2
(22) Date of filing: 24.06.2025
(51) Int. Cl.: H01M 10/54, H01M 50/19, H01M 10/04, H01M 4/02

(54) **BIPOLAR BATTERY AND METHOD OF PRODUCING RECYCLED MATERIAL**

(30) Priority: 30.07.2024 JP 2024123130
(71) Applicant: TOYOTA JIDOSHA KABUSHIKI KAISHA, Toyota-shi, Aichi-ken 471-8571 (JP)
(72) Inventor: KATO, Kazuhito, Toyota-shi, 471-8571 (JP); MORIOKA, Satoshi, Toyota-shi, 471-8571 (JP); MIKI, Nariaki, Toyota-shi, 471-8571 (JP); ABE, Takeshi, Toyota-shi, 471-8571 (JP); FUJISHIMA, Seigo, Toyota-shi, 471-8571 (JP); YOKOYAMA, Tomohiro, Toyota-shi, 471-8571 (JP); KATO, Masashi, Toyota-shi, 471-8571 (JP)
(74) Representative: Kuhnen & Wacker Patent- und Rechtsanwaltsbüro PartG mbB

(57) **Abstract**

A bipolar battery comprises bipolar electrodes (10) and a sealing material (30). The bipolar electrodes (10) are stacked in a perpendicular-to-plane direction. In the perpendicular-to-plane direction, each of the bipolar electrodes (10) includes a positive electrode layer (11), a current-collecting foil sheet (13), and a negative electrode layer (12) in this order. In an in-plane direction, the current-collecting foil sheet (13) extends outwardly beyond the positive electrode layer (11) and the negative electrode layer (12). At an end in the in-plane direction, the sealing material (30) is attached to the current-collecting foil sheet (13) to seal interstices between the current-collecting foil sheets (13) that are adjacent to each other in the perpendicular-to-plane direction. The sealing material (30) includes a first resin layer (31) and a second resin layer (32) in the perpendicular-to-plane direction. A relationship of "Tm₂<Tm₁<Tm₀" is satisfied. "Tm₀" represents a melting point of the current-collecting foil sheet (13). "Tm₁" represents a melting point of the first resin layer (31). "Tm₂" represents a melting point of the second resin layer (32).

## Description

### CROSS REFERENCE TO RELATED APPLICATIONS

This nonprovisional application is based on Japanese Patent Application No. 2024-123130 filed on July 30, 2024, with the Japan Patent Office, the entire contents of which are hereby incorporated by reference.

### BACKGROUND

### Field

The present disclosure relates to a bipolar battery and a method of producing a recycled material.

### Description of the Background Art

Japanese Patent Laying-Open No. 2010-277862 discloses a bipolar battery.

### SUMMARY

There is a demand for collecting and recycling various materials from batteries that are no longer needed. To meet this demand, batteries that are easy to disassemble are desired.

Researches have been conducted on a bipolar battery in which the interstices between bipolar electrodes are sealed and thereby a plurality of cells are formed. In a bipolar battery of this type, there tend to be much sealed area. At the time of disassembling such a bipolar battery, how to separate the sealing material, which strongly joins bipolar electrodes (current-collecting foil sheets) to one another, from the bipolar electrodes is an issue to be addressed.

An object of the present disclosure is to provide a bipolar battery that is easy to disassemble.
1. An aspect of the present disclosure is a bipolar battery. The bipolar battery comprises bipolar electrodes and a sealing material. The bipolar electrodes are stacked in a perpendicular-to-plane direction. In the perpendicular-to-plane direction, each of the bipolar electrodes includes a positive electrode layer, a current-collecting foil sheet, and a negative electrode layer in this order. In an in-plane direction, the current-collecting foil sheet extends outwardly beyond the positive electrode layer and the negative electrode layer. At an end in the in-plane direction, the sealing material is attached to the current-collecting foil sheet to seal interstices between the current-collecting foil sheets that are adjacent to each other in the perpendicular-to-plane direction. The sealing material includes a first resin layer and a second resin layer in the perpendicular-to-plane direction. A relationship of "Tm₂<Tm₁<Tm₀" is satisfied. "Tm₀" represents a melting point of the current-collecting foil sheet. "Tm₁" represents a melting point of the first resin layer. "Tm₂" represents a melting point of the second resin layer.
   In the present disclosure, the sealing material includes a first resin layer and a second resin layer. The second resin layer can be likened to a release layer. Among the second resin layer, the first resin layer, and the current-collecting foil sheet, the second resin layer has the lowest melting point. Because of this, by heating the sealing material at a temperature not less than the melting point of the second resin layer and less than the melting point of the first resin layer, it is possible to selectively melt the second resin layer. As a result of melting the second resin layer, a weak part is created, and starting from this weak part, the sealing material can be easily peeled off from the current-collecting foil sheet. Hence, a bipolar battery that is easy to disassemble may be provided.
2. The bipolar battery according to "1" above may include the following configuration, for example. The second resin layer is thinner than the first resin layer.
   When the second resin layer (a release layer) is thinner, heat tends to be easily transferred across the entire second resin layer. When the first resin layer is thicker, sealing properties are expected to be enhanced, for example.
3. The bipolar battery according to "1" or "2" above may include the following configuration, for example. The second resin layer includes at least part of an interface between the sealing material and the current-collecting foil sheet.
   When the second resin layer is disposed at the interface between the sealing material and the current-collecting foil sheet, separation of the sealing material from the current-collecting foil sheet may be facilitated.
4. The bipolar battery according to any one of "1" to "3" above may include the following configuration, for example. In the in-plane direction, the second resin layer extends along a periphery of the current-collecting foil sheet.
5. The bipolar battery according to any one of "1" to "4" above may include the following configuration, for example. In the perpendicular-to-plane direction, the sealing material includes the second resin layer, the first resin layer, and the second resin layer in this order.
   The sealing material may have a multilayer structure consisting of three or more layers, for example.
6. The bipolar battery according to any one of "1" to "5" above may include the following configuration, for example. The second resin layer covers an entire surface of the first resin layer.
7. The bipolar battery according to any one of "1" to "5" above may include the following configuration, for example. The second resin layer covers a part of a surface of the first resin layer.
8. An aspect of the present disclosure is a method of producing a recycled material. The method of producing a recycled material comprises (a) and (b) below:
   (a) preparing the bipolar battery according to any one of "1" to "7" above; and
   (b) separating the bipolar electrodes from each other by selectively melting or dissolving at least part of the second resin layer.
   As described above, the sealing material may be heated for selectively melting the second resin layer. For example, a solvent capable of selectively dissolving the second resin layer may be made to adhere to the sealing material to dissolve the second resin layer.
9. The method of producing a recycled material according to "8" above may include the following configuration, for example. The (b) includes heating the sealing material at a temperature not less than Tm₂ and less than Tm₁.

In the following, an embodiment of the present disclosure (which may also be simply called "the present embodiment" hereinafter) will be described. It should be noted that the present embodiment does not limit the technical scope of the present disclosure. The present embodiment is illustrative in any respect. The present embodiment is non-restrictive. The technical scope of the present disclosure encompasses any modifications within the meaning and the scope equivalent to the terms of the claims. For example, it is originally planned that any configurations of the present embodiment may be optionally combined.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

Fig. 1 is a schematic top view of a bipolar battery according to the present embodiment.
Fig. 2 is a schematic view of a cross section cut along the line II-II in Fig. 1.
Fig. 3 is a first schematic cross-sectional view illustrating an example of a sealing material according to the present embodiment.
Fig. 4 is a second schematic cross-sectional view illustrating an example of a sealing material according to the present embodiment.
Fig. 5 is a third schematic cross-sectional view illustrating an example of a sealing material according to the present embodiment.
Fig. 6 is a schematic flowchart illustrating a method of producing a recycled material according to the present embodiment.

### DESCRIPTION OF THE PREFERRED EMBODIMENTS

### Terms and Phrases

Expressions such as "comprise", "include", and "have", and other similar terms are open-ended expressions. In the configuration expressed by an open-ended expression, in addition to an essential component, an additional component may or may not be further included. The expression "consist of" is a closed-end expression. However, even in a configuration that is expressed by a closed-end expression, impurities present under ordinary circumstances as well as an additional element irrelevant to the technique of interest may be included. The expression "consist essentially of" is a semiclosed-end expression. A configuration expressed by a semiclosed-end expression tolerates addition of an element that does not substantially affect the fundamental, novel features of the technique of interest.

Regarding a plurality of steps, operations, processes, and the like that are included in various methods, the order for implementing them is not limited to the described order, unless otherwise specified. For example, a plurality of steps may proceed simultaneously. For example, a plurality of steps may be implemented in reverse order.

Expressions such as "first" and "second" are used solely for differentiating a plurality of elements from each other. Such expressions do not limit the scope of these elements. For example, these expressions are irrelevant to the order and the significance of these elements.

Any geometric term should not be interpreted solely in its exact meaning. Examples of geometric terms include "parallel", "vertical", "orthogonal", and the like. For example, as long as substantially the same or similar functions are obtained, the relative direction, angle, distance, and the like may vary. Any geometric term herein may include tolerances and/or errors in terms of design, operation, production, and/or the like. The dimensional relationship in each figure may not necessarily coincide with the actual dimensional relationship. For the purpose of assisting understanding for the readers, the dimensional relationship in each figure may have been changed. For example, length, width, thickness, and the like may have been changed. A part of a given configuration may have been omitted.

"Perpendicular-to-plane direction" refers to the direction of a normal to the surface of a sheet-form member (such as a foil sheet or an electrode, for example). "In-plane direction" refers to any direction that is orthogonal to the perpendicular-to-plane direction. In the drawings related to the present embodiment, the Z-axis direction corresponds to the perpendicular-to-plane direction. Each of the X-axis direction and the Y-axis direction is an example of an in-plane direction.

The melting point "Tm₀" of a current-collecting foil sheet may be measured by a conventionally-known melting point test. For example, when the current-collecting foil sheet includes two or more types of metal foil sheets (metal layers), the melting point of the lower one is regarded as the melting point of the current-collecting foil sheet. The melting point "Tm₁" and "Tm₂" of a resin material refers to the "melting temperature" measured in accordance with JIS K 7121.

"Selectively" means that, as for at least one of the melting amount (per unit mass), the melting rate, the dissolving amount (per unit mass), and the dissolving rate measured under the same conditions (such as heating), the value for a second resin layer is greater than both the value for a first resin layer and the value for a current-collecting foil sheet.

All the numerical values are regarded as being modified by the term "about". The term "about" may mean ±5%, ±3%, ±1%, and/or the like, for example. Each numerical value may be an approximate value that can vary depending on the implementation configuration of the technique of interest. Each numerical value may be expressed in significant figures. Unless otherwise specified, each measured value may be the average value obtained by multiple rounds of measurement. The number of rounds of measurement may be 3 or more, or may be 5 or more, or may be 10 or more. Generally, the greater the number of rounds of measurement is, the more reliable the average value is expected to be. Each measured value may be rounded off based on the number of the significant figures. Each measured value may include an error occurring due to the identification limit of the measurement apparatus, for example.

Each of "not less than" and "not more than" is represented by an inequality symbol with an equality symbol, e.g., "≤, ≥". Each of "more than" and "less than" is represented by an inequality symbol without an equality symbol, e.g., "<, >". Any numerical value selected from a certain numerical range may be used as a new upper limit or a new lower limit.

### Bipolar Battery

A bipolar battery may have any configuration. In some of the present embodiments, the bipolar battery may be a liquid-type lithium-ion battery. In some of the present embodiments, the bipolar battery may be an all-solid-state lithium-ion battery. In some of the present embodiments, the bipolar battery may be a nickel-metal hydride battery. In the following, the present embodiment related to a liquid-type lithium-ion battery will be described as an example.

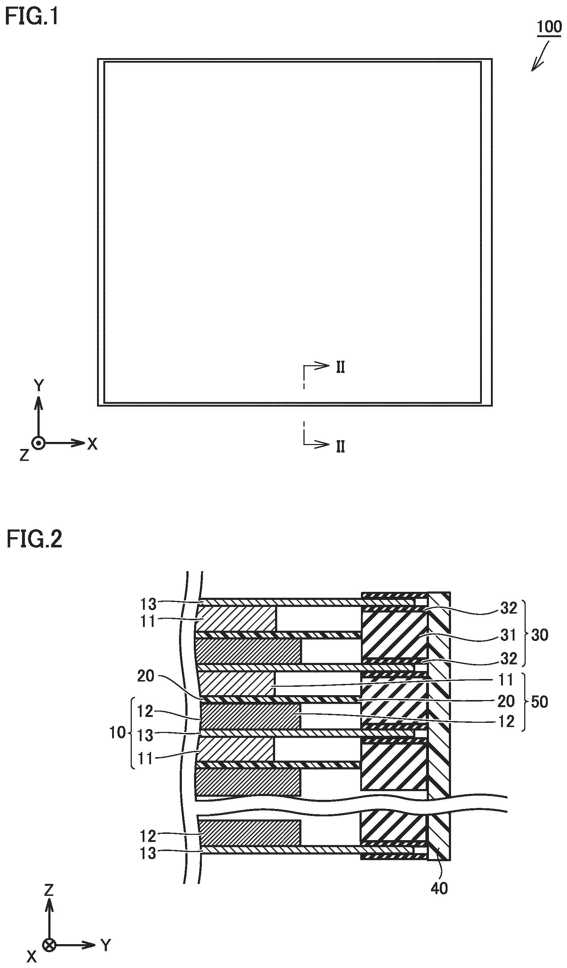

Fig. 1 is a schematic top view of a bipolar battery according to the present embodiment. Fig. 2 is a schematic view of a cross section cut along the line II-II in Fig. 1. A bipolar battery 100 comprises a plurality of bipolar electrodes 10, a sealing material 30, and an electrolyte solution (not illustrated). Bipolar battery 100 may further comprise a separator 20. Bipolar electrodes 10 are stacked together in the perpendicular-to-plane direction (in the Z-axis direction). The perpendicular-to-plane direction (the Z-axis direction) may also be called "the stacking direction". In the perpendicular-to-plane direction, each of bipolar electrodes 10 includes a positive electrode layer 11, a current-collecting foil sheet 13, and a negative electrode layer 12 in this order.

Current-collecting foil sheet 13 is electrically conductive. For example, current-collecting foil sheet 13 may include a metal foil sheet and/or the like. For example, current-collecting foil sheet 13 may be formed by bonding an aluminum foil sheet (with a melting point of 660°C) and a copper foil sheet (with a melting point of 1085°C) together. In this case, the melting point "Tm₀" of current-collecting foil sheet 13 is 660°C. In the in-plane direction, current-collecting foil sheet 13 extends outwardly beyond positive electrode layer 11 and negative electrode layer 12.

Positive electrode layer 11 is adhered to one side of current-collecting foil sheet 13. Positive electrode layer 11 includes a positive electrode active material. The positive electrode active material may include a lithium-nickel composite oxide, an olivine-type phosphate compound, and/or the like, for example. Positive electrode layer 11 may further include a conductive material, a binder, and the like, for example.

Negative electrode layer 12 is adhered to one side of current-collecting foil sheet 13. Negative electrode layer 12 is positioned on the opposite side of current-collecting foil sheet 13 to positive electrode layer 11. The area of negative electrode layer 12 may be greater than that of positive electrode layer 11. Negative electrode layer 12 includes a negative electrode active material. The negative electrode active material may include graphite, silicon, silicon oxide, silicon-carbon composite material, lithium-titanium composite oxide, and/or the like, for example. Negative electrode layer 12 may also further include a conductive material, a binder, and the like, for example.

Separator 20 is interposed between bipolar electrodes 10. Separator 20 electrically separates positive electrode layer 11 from negative electrode layer 12 that are adjacent to each other in the perpendicular-to-plane direction. Separator 20 may include a porous resin film and/or the like, for example.

At an end in the in-plane direction, sealing material 30 is attached to current-collecting foil sheet 13. For example, sealing material 30 may be heat-sealed to current-collecting foil sheet 13. For example, sealing material 30 may be provided along the entire periphery in the in-plane direction. With the sealing material 30 attached to current-collecting foil sheet 13, the interstices between current-collecting foil sheets 13 that are adjacent to each other in the perpendicular-to-plane direction are sealed.

In the in-plane direction, the outer side of sealing material 30 may be further sealed with a second sealing material 40. Second sealing material 40 may include polypropylene, polyphenylene sulfide, modified polyphenylene ether, and the like, for example.

The interstices between current-collecting foil sheets 13 are sealed, and thereby a plurality of cells 50 are formed. Cell 50 is the smallest constituent unit of the battery. Because it includes a plurality of cells 50, bipolar battery 100 may also be referred to as "a bipolar module". Cells 50 are segregated from each other. Each cell 50 includes positive electrode layer 11, separator 20, negative electrode layer 12, and an electrolyte solution. The electrolyte solution is a liquid electrolyte. The electrolyte solution may include an organic solvent, a supporting salt (a lithium salt), and the like, for example.

Sealing material 30 includes a first resin layer 31 and a second resin layer 32 in the perpendicular-to-plane direction. The melting point "Tm₂" of second resin layer 32 is lower than the melting point "Tm₁" of first resin layer 31. As long as the relationship of "Tm₂<Tm₁<Tm₀" is satisfied, each of first resin layer 31 and second resin layer 32 may include any resin material. For example, a suitable resin material may be selected from the following materials so that the relationship of "Tm₂<Tm₁<Tm₀" is satisfied. It should be noted that the melting point described for each resin material is provided as a rough indication. The melting point can change depending on the molecular weight, the density, the degree of acid denaturation, and the like, for example.

Low-density polyethylene (melting point, 100°C), high-density polyethylene (melting point, 130°C), polypropylene (melting point, 160°C), polyacetal (melting point, 180°C), nylon 6 (melting point, 225°C), nylon 66 (melting point, 265°C), polybutylene terephthalate (melting point, 224°C), polyphenylene sulfide (melting point, 290°C), polyether ether ketone (melting point, 343°C)

In some of the present embodiments, as second resin layer 32, low-density polyethylene may be selected, for example. In some of the present embodiments, as first resin layer 31, high-density polyethylene may be selected, for example.

The difference in melting point, "Tm₁-Tm₂", may be 10°C or more, for example. The difference in melting point may be 25°C or more, or 50°C or more, or 75°C or more, or 100°C or more, for example. The difference in melting point may be 200°C or less, or 150°C or less, or 100°C or less, or 75°C or less, for example.

Second resin layer 32 may be thinner than first resin layer 31. The ratio of the thickness of second resin layer 32 to the thickness of first resin layer 31 may be 0.9 or less, or 0.8 or less, or 0.7 or less, or 0.6 or less, or 0.5 or less, or 0.4 or less, or 0.3 or less, or 0.2 or less, or 0.1 or less, for example. The ratio of the thickness of second resin layer 32 to the thickness of first resin layer 31 may be 0.01 or more, or 0.05 or more, or 0.1 or more, or 0.2 or more, or 0.3 or more, or 0.4 or more, or 0.5 or more, or 0.6 or more, for example.

The thickness of second resin layer 32 may be 1 µm or more, or 10 µm or more, or 25 µm or more, or 50 µm or more, or 75 µm or more, for example. The thickness of second resin layer 32 may be 100 µm or less, or 75 µm or less, or 50 µm or less, for example.

The thickness of first resin layer 31 may be more than 100 µm, or 150 µm or more, or 200 µm or more, or 300 µm or more, or 400 µm or more, or 500 µm or more, or 600 µm or more, or 700 µm or more, or 800 µm or more, or 900 µm or more, for example. The thickness of first resin layer 31 may be 1000 µm or less, or 900 µm or less, or 800 µm or less, or 700 µm or less, or 600 µm or less, or 500 µm or less, for example.

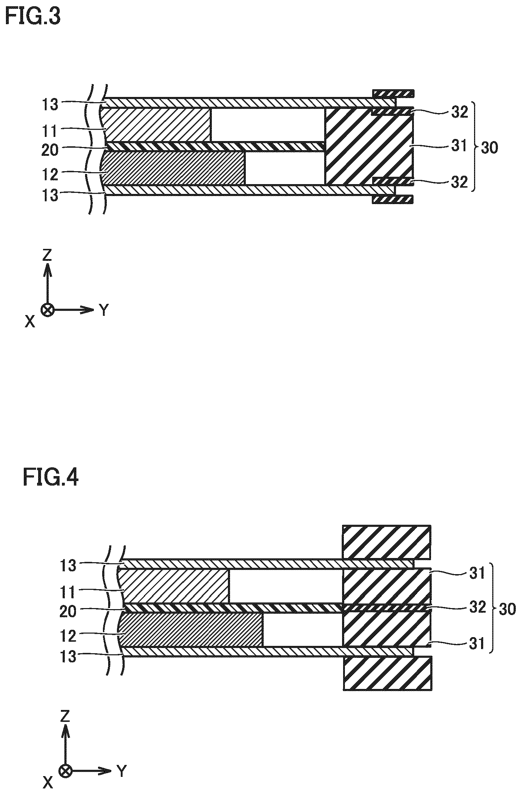

Fig. 3 is a first schematic cross-sectional view illustrating an example of a sealing material according to the present embodiment. Second resin layer 32 may include part of the interface between sealing material 30 and current-collecting foil sheet 13, for example. Second resin layer 32 may include the entire interface between sealing material 30 and current-collecting foil sheet 13, for example. That is, second resin layer 32 may include at least part of the interface between sealing material 30 and current-collecting foil sheet 13. Second resin layer 32 may cover a part of the surface of first resin layer 31. Second resin layer 32 may cover the entire surface of first resin layer 31. In the in-plane direction (the Y-axis direction), an end face of second resin layer 32 may be exposed to the outside. In the in-plane direction, second resin layer 32 may be exposed from current-collecting foil sheet 13. In the in-plane direction, second resin layer 32 may extend outwardly beyond current-collecting foil sheet 13.

In the in-plane direction (the direction of a normal to the surface of the paper), second resin layer 32 may extend along the periphery of current-collecting foil sheet 13. Second resin layer 32 may be formed along the entire periphery of the current-collecting foil sheet.

Second resin layer 32 may be formed on one side of first resin layer 31. Second resin layer 32 may be formed on both sides of first resin layer 31. In other words, in the perpendicular-to-plane direction, sealing material 30 may include second resin layer 32, first resin layer 31, and second resin layer 32 in this order.

Fig. 4 is a second schematic cross-sectional view illustrating an example of a sealing material according to the present embodiment. In the perpendicular-to-plane direction, sealing material 30 may include first resin layer 31, second resin layer 32, and first resin layer 31 in this order.

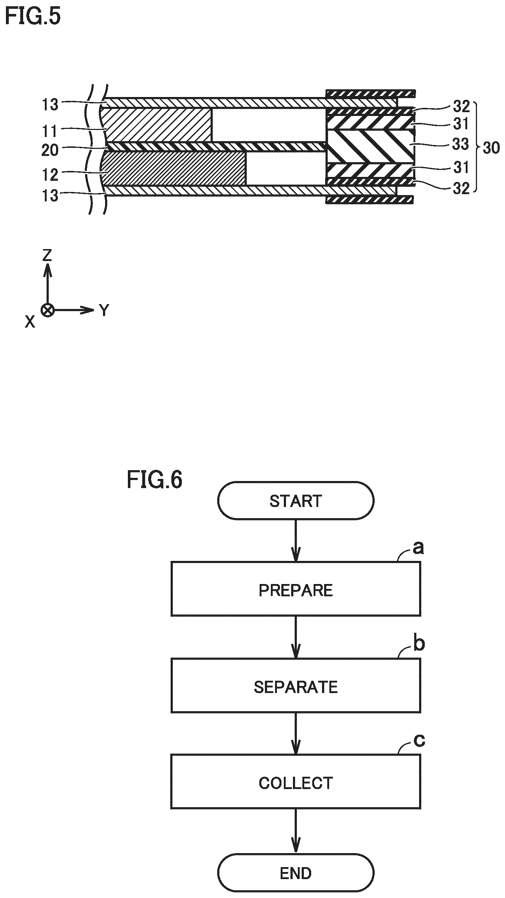

Fig. 5 is a third schematic cross-sectional view illustrating an example of a sealing material according to the present embodiment. In addition to first resin layer 31 and second resin layer 32, sealing material 30 may further include an additional layer. Sealing material 30 may further include a spacer layer 33 and/or the like, for example. In the perpendicular-to-plane direction, spacer layer 33 may be positioned at the center of sealing material 30. To spacer layer 33, first resin layer 31 may be attached. Spacer layer 33 may include ABS, polycarbonate, polyethylene terephthalate, polyethylene, polypropylene, polyimide, and/or the like, for example. Spacer layer 33 may be thicker than first resin layer 31. The thickness of spacer layer 33 may be from 0.1 to 3 mm, for example.

### Method of Producing Recycled Material

Fig. 6 is a schematic flowchart illustrating a method of producing a recycled material according to the present embodiment. Hereinafter, "the method of producing a recycled material according to the present embodiment" may be also simply called "the present method". The present method comprises "(a) preparing" and "(b) separating". The present method may further comprise "(c) collecting" and the like, for example.

### (a) Preparing

The present method includes preparing bipolar battery 100. The details of bipolar battery 100 are as described above. For example, a used battery that is significantly deteriorated may be prepared. For example, a defective battery that was rejected during the production process may be prepared.

### (b) Separating

The present method includes separating bipolar electrodes 10 from each other by selectively melting or dissolving at least part of second resin layer 32. For example, second sealing material 40 may be removed in advance by cutting and/or the like. Part of second resin layer 32 may be melted, or the entire second resin layer 32 may be melted. For example, the present method may include heating the sealing material 30 at a temperature not less than Tm₂ and less than Tm₁. The method for heating is not particularly limited. For example, a heating iron and/or the like may be used. It should be noted that part of first resin layer 31 may be melted.

In some of the present embodiments, the solubility parameter of first resin layer 31 is different from the solubility parameter of second resin layer 32. For example, a solvent capable of selectively dissolving the second resin layer 32 may be applied to sealing material 30. In some of the present embodiments, use of solvent and heating may be employed in combination.

### (c) Collecting

For example, the present method may further include collecting various materials from bipolar electrodes 10 thus separated. For example, a positive electrode composite material (positive electrode layer 11), a negative electrode composite material (negative electrode layer 12), current-collecting foil sheet 13, and/or the like may be collected.

From a material thus collected, a recycled material may be produced. For example, various battery materials may be produced. For example, a positive electrode active material thus collected may be used as it is, as a recycled material (direct recycling). For example, a positive electrode active material may be synthesized from a material (a metal salt) thus collected. For example, a current-collecting foil sheet thus collected may be dissolved and/or smelted to produce various metal products.

## Claims

1. A bipolar battery comprising:
bipolar electrodes (10); and
a sealing material (30), wherein
the bipolar electrodes (10) are stacked in a perpendicular-to-plane direction,
in the perpendicular-to-plane direction, each of the bipolar electrodes (10) includes a positive electrode layer, (11) a current-collecting foil sheet (13), and a negative electrode layer (12) in this order,
in an in-plane direction, the current-collecting foil sheet (13) extends outwardly beyond the positive electrode layer (11) and the negative electrode layer (12),
at an end in the in-plane direction, the sealing material (30) is attached to the current-collecting foil sheet (13) to seal interstices between the current-collecting foil sheets (13) that are adjacent to each other in the perpendicular-to-plane direction,
the sealing material (30) includes a first resin layer (31) and a second resin layer (32) in the perpendicular-to-plane direction, and
a relationship of:
Tm₂<Tm₁<Tm₀
is satisfied, where
Tm₀ represents a melting point of the current-collecting foil sheet (13),
Tm₁ represents a melting point of the first resin layer (31), and
Tm₂ represents a melting point of the second resin layer (32).

2. The bipolar battery according to claim 1, wherein the second resin layer (32) is thinner than the first resin layer (31).

3. The bipolar battery according to claim 1, wherein the second resin layer (32) includes at least part of an interface between the sealing material (30) and the current-collecting foil sheet (13).

4. The bipolar battery according to claim 1, wherein in the in-plane direction, the second resin layer (32) extends along a periphery of the current-collecting foil sheet (13).

5. The bipolar battery according to claim 1, wherein in the perpendicular-to-plane direction, the sealing material (30) includes the second resin layer (32), the first resin layer (31), and the second resin layer (32) in this order.

6. The bipolar battery according to claim 1, wherein the second resin layer (32) covers an entire surface of the first resin layer (31).

7. The bipolar battery according to claim **1,** wherein the second resin layer (32) covers a part of a surface of the first resin layer (31).

8. A method of producing a recycled material, the method comprising:
(a) preparing the bipolar battery according to any one of claims 1 to 7; and
(b) separating the bipolar electrodes (10) from each other by selectively melting or dissolving at least part of the second resin layer (32).

9. The method of producing a recycled material according to claim 8, wherein the (b) includes heating the sealing material (30) at a temperature not less than Tm₂ and less than Tm₁.
